# EUROPEAN PATENT SPECIFICATION

(11) **EP 3 606 876 B1**
(45) Date of publication and mention of the grant of the patent: **07.06.2023**
(21) Application number: 18713355.8
(22) Date of filing: 05.03.2018
(51) Int. Cl.: C02F 1/44, C02F 1/24, C02F 101/30, C02F 103/44, C02F 1/00

(54) **METHOD FOR TREATMENT AND REUSE OF WASTE WATERS ORIGINATED BY THE WASHING OF AGRICULTURAL MEANS**
VERFAHREN ZUR BEHANDLUNG UND WIEDERVERWENDUNG VON DURCH DAS WASCHEN VON LANDWIRTSCHAFTLICHEN VORRICHTUNGEN
PROCÉDÉ POUR LE TRAITEMENT ET LA RÉUTILISATION D'EAUX USÉES PROVENANT DU LAVAGE D'OUTILS AGRICOLES

(30) Priority: 06.03.2017 IT 201700024583
(43) Date of publication of application: 12.02.2020
(73) Proprietor: Mete S.r.l., 38062 Arco (TN) (IT)
(72) Inventor: GUELLA, Michele, Riva Del Garda (TN) (IT)
(74) Representative: Papa, Elisabetta
(86) International application number: PCT/IB2018/051402
(87) International publication number: WO 2018/163047

(56) References cited:
- WO-A2-2006/116533
- WO-A2-2015/184471
- US-A1- 2003 037 805
- US-A1- 2008 217 244
- US-A1- 2011 127 217

## Description

### Technical field of the invention

The present invention relates to a method for the treatment and reuse of waste water originated from washing agricultural vehicles, such as tractors.

### State of art

The contamination of environment, and in particular of water, caused by pesticide products is a very important problem. Several studies have highlighted that the modes for performing the inner and outer washing of the agricultural vehicles, in particular of spraying machines, have to be performed carefully in order to guarantee maximum decontamination effectiveness of the machine and to avoid the environment contamination with washing water of spraying machine, still containing crop protection products. In the state of art some methods for the treatment of the waste water generated by washing the machines and the agricultural atomizers have been proposed, as briefly described hereinafter. Currently in the state of art other methods for the treatment of waste water generated by the inner and outer washing of the agricultural vehicles, that do not use membrane filtration systems, are provided. Some of them are based upon a chemical-physical treatment with flocculant agents or by coagulation which can be followed by a classical filtration and/or by an adsorption on ion exchange resins or on activated carbons, other ones are based upon a water evaporation or by means of a permeation of water vapour through a membrane or directly by solar radiation or forced ventilation and heating. Other devices are based upon the degradation of the pesticide products or by means of natural biodegradation in a substrate constituted by earth and organic material or by addition of oxidizing chemical products the action thereof can be made more effective even by using UV rays.

The previously described methods are characterized by huge overall size dimensions upon increasing the quantity of waste water to be treated and by an intrinsic low effectiveness depending upon the solar radiation [such as for example the (bio)-degradation and/or natural evaporation]; they request a difficult development of process conditions which depends upon the waste water variability apart from a high dosage of chemical products [such as for example precipitation and coagulation], and they generate residues which have to be disposed of [such as for example, filtering cartridges, activated carbons]. Methods are also known, both in literature and at level of pilot and commercial systems, which are based upon membrane technology, in particular on reverse osmosis technology which can be preceded by an ultrafiltration or by a physical chemical treatment and in case followed by a finishing treatment by absorption on active carbons or with ozone. The use of reverse osmosis, due to waste water salinity, requests very high operating pressure which limit the concentration of the same apart from causing the precipitation of several compounds leading to clogging of the membranes by limiting considerably the process effectiveness and increasing costs. The same dosage of oxidizing agents on the permeate can generate a discharge not compatible with the existing law.

Moreover, the systems adopted at the same time in the state of art do not allow the recovery/recycle of the involved huge quantities of water. The not recoverable nature is the concomitant cause of pollutions of ground and surface water consequent to the use of the used classical methods. Some relevant prior art documents are: US 2003/037805 A1, WO 2015/184471 A2, US 2008/217244 A1, US 2011/127217 A1.

The state of art as above reconstructed then highlights several disadvantages in terms of low effectiveness and high costs, moreover it has the important limit of not allowing the reuse of waste water.

### Summary of the invention

The technical problem placed and solved by the present invention is then to provide a method and apparatus for treatment and reuse of waste water originated by the washing of agricultural vehicles allowing to obviate the drawbacks mentioned above with reference to the known art.

Such problem is solved by the method according to claim 1 which comprises he essential features of the invention.

Preferred features of the present invention are set forth in the depending claims. The method of the present invention has the following advantages:
- Modular system, in terms of production capacity and that can be adapted to the different type of waste water to be treated: washing of tractors,
- System that can be provided in different configurations depending upon the requests
- Reduced overall dimensions, that can be adapted to the available spaces;
- Removal of the active principles nowadays used in agriculture and that can be easily adapted to the removal of newly designed crop protection products;
- Removal of metallic ions, fats, oils and hydrocarbons
- Removal of the suspended solids (moulds, leaves, etc.) and of COD;
- Continuous, scalable, short-lasting and highly-effective process;
- System that is easy to be managed and can be remotely controlled;
- Recycle and reuse of water by minimizing the waste water quantity to be disposed of,
- Minimum use of chemical products which are made to recirculate inside the apparatus.

Other advantage, features and use modes of the present invention will result evident from the following detailed description of some embodiments, shown by way of example and not for limitative purpose.

### Brief description of the drawings

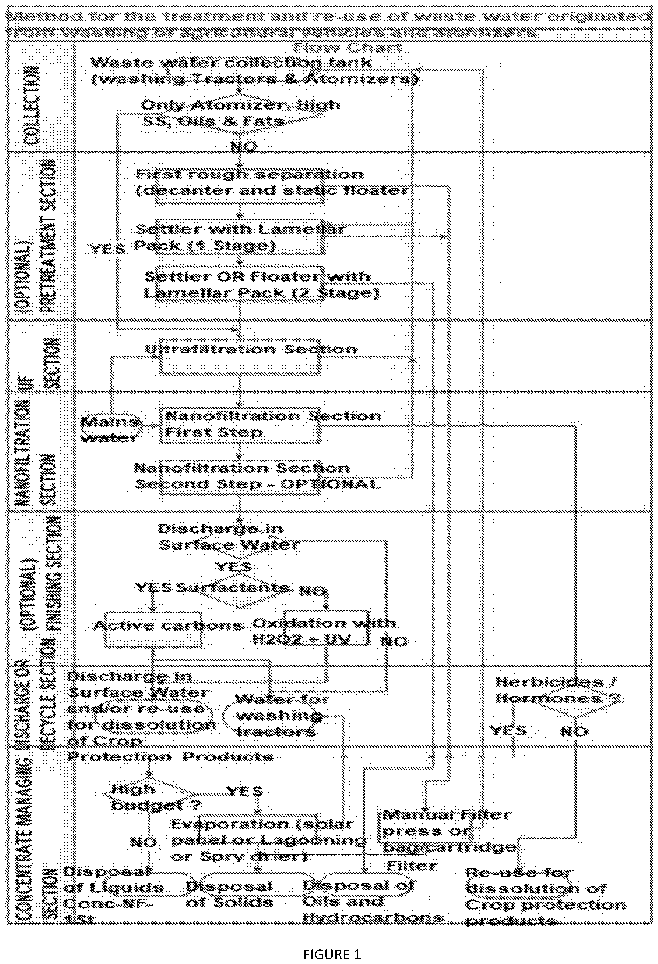

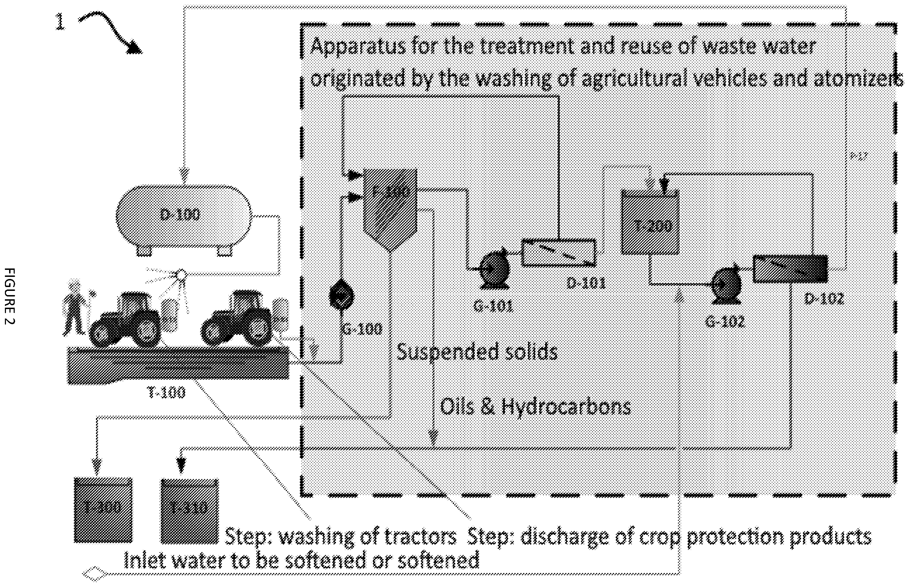

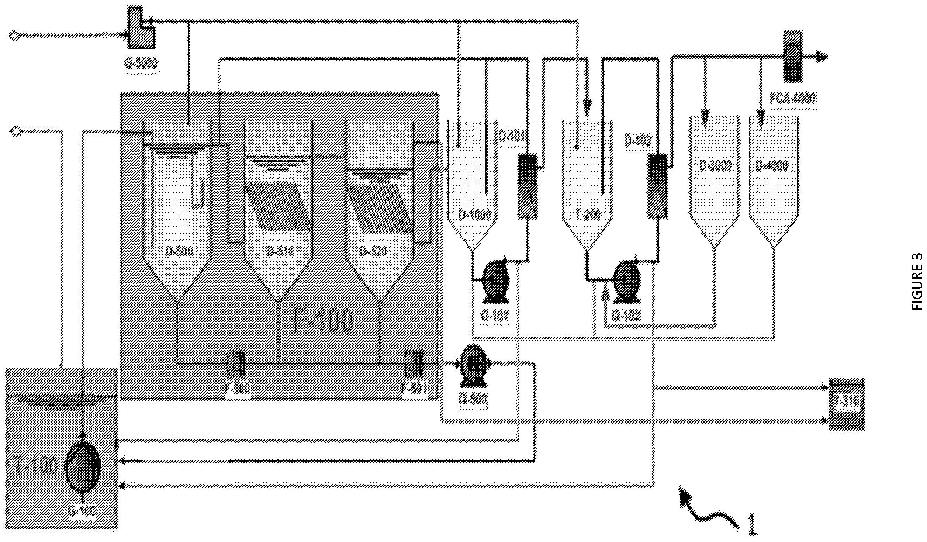

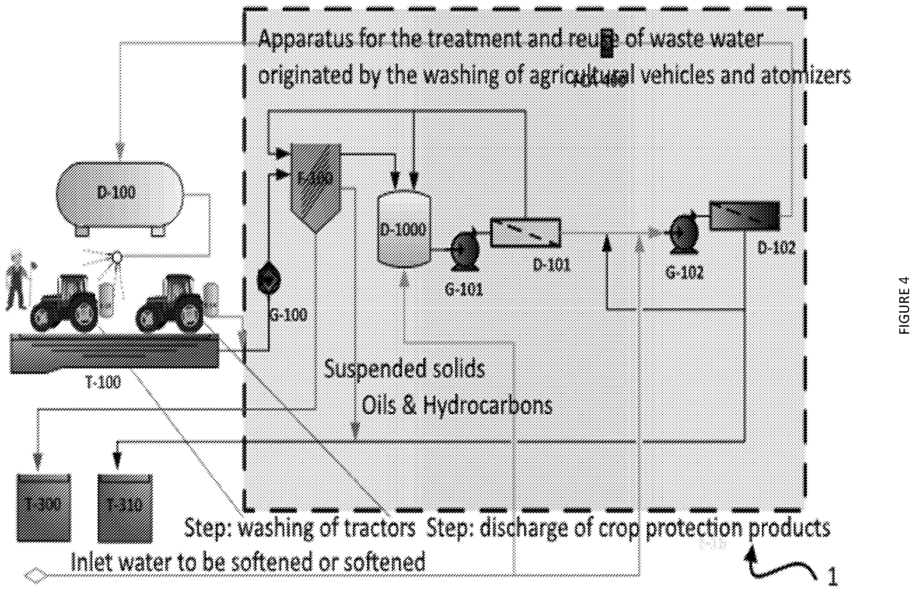

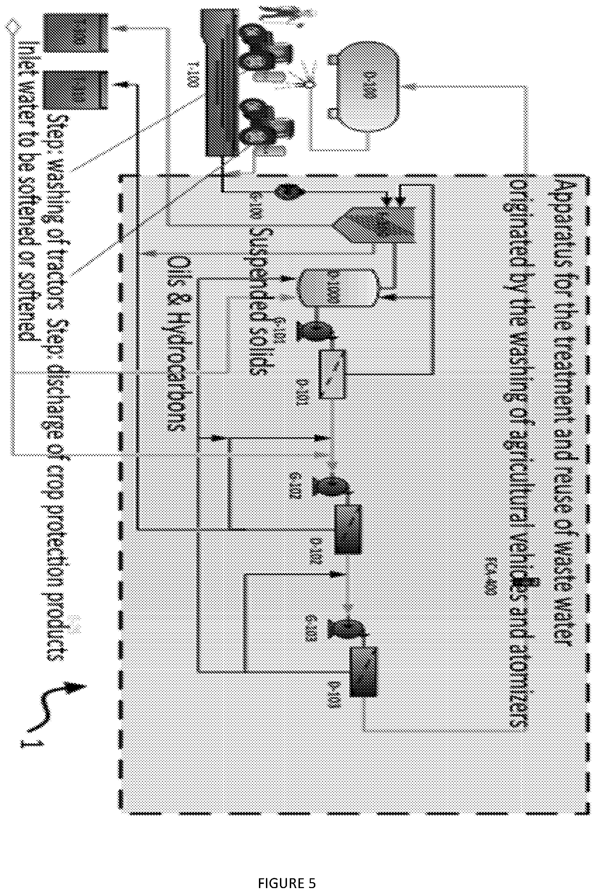

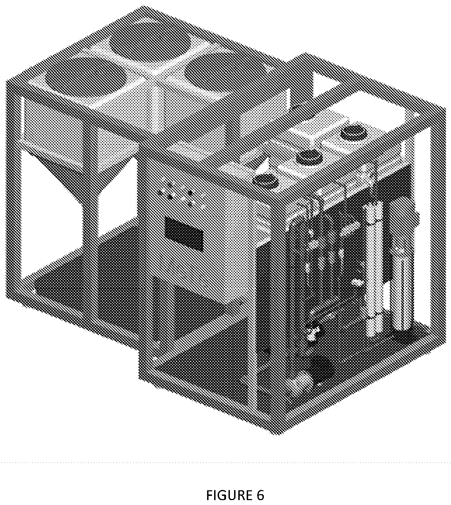

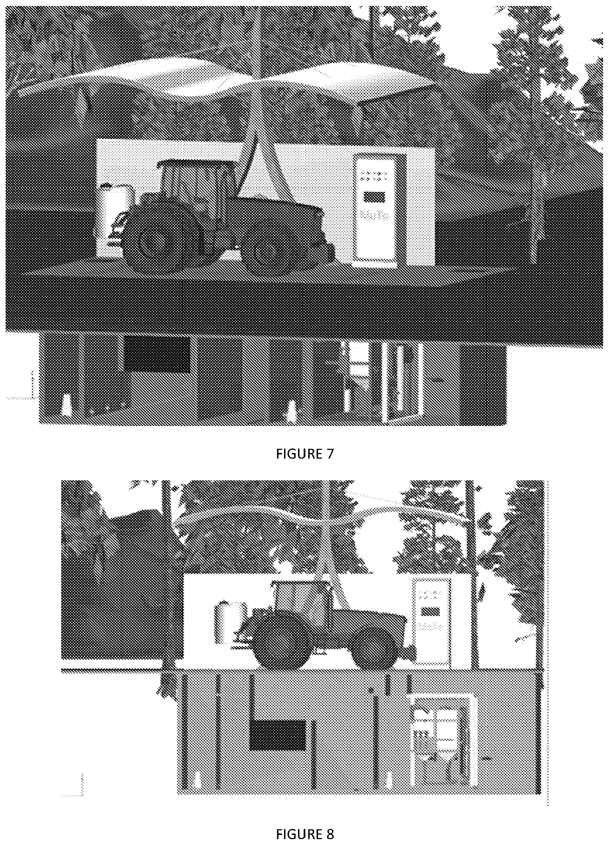

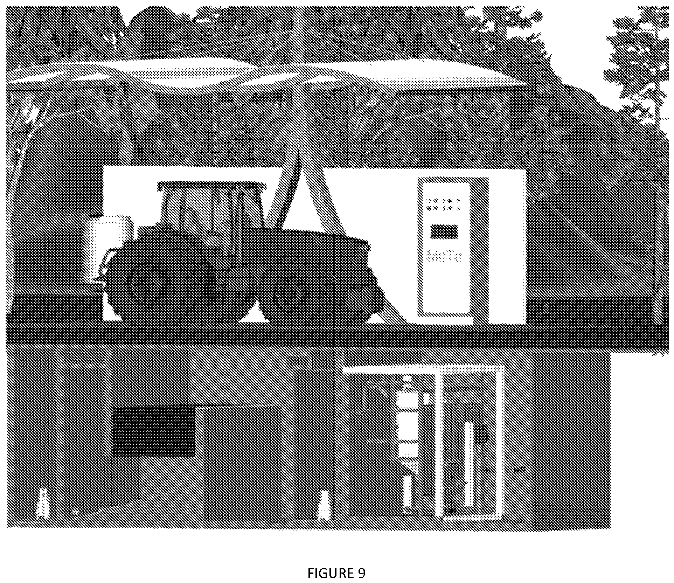

The figures of the enclosed drawings will be referred to, wherein:
▪ figure 1 describes the flow chart of an embodiment of the method according to the present invention;
▪ figure 2 represents schematically and generally an additional embodiment of the method according to the present invention;
▪ figure 3 represents in more details an additional preferred embodiment of the method according to the present invention;
▪ figure 4 represents schematically and generally an additional embodiment of the method according to the present invention;
▪ figure 5 represents schematically and generally an additional embodiment of the method according to the present invention;
▪ figure 6 shows a perspective overall view of the apparatus suitable to implement the method according to the present invention on small scale.
▪ figures 7-9 show a perspective overall view of the apparatus suitable to implement the method according to the present invention on large scale.

### Detailed description of preferred embodiments

The method provides the following general steps which will be described in details according to some preferred embodiments:
i) a step of collecting the waste water originated by the washing of agricultural vehicles (tractors, spraying machines, etc.);
ii) optionally before the ultrafiltration or microfiltration step subjecting the washing water to a pretreatment step;
iii) subjecting the washing water to a ultrafiltration or microfiltration step;
iv) subjecting the permeate obtained from ultrafiltration or microfiltration to one or more steps of nanofiltration or reverse osmosis or filtration by reverse osmosis;
v) reusing the permeate obtained from the step of nanofiltration or reverse osmosis for washing agricultural vehicles and/or for preparing mixtures of pesticides.

The method could further provide an additional step of finishing the nanofiltration permeate and a step of managing the concentrates, these additional steps too will be described hereinafter according to some embodiments described by way of example and not for limitative purposes.

The method according to the present invention will be firstly described with reference to the embodiments of figures 2-5.

### Collection step

The agricultural vehicles are generally washed in a yard by means of hydro-cleaning machines or automatic washing systems. Washing water is conveyed from the parking yard, in case even together with the discharge of atomizers. Washing water could be collected in an underground tank having for example a volume of about 2-3 m3, through an open-channel conduit or in a not underground container. In figure 2 the collecting tank is designated as element T-100. The crop protection products included in the atomizer can be either discharged to ground in the yard and collected together with the washing water of the tractor or discharged directly in a suitable basin (by means of dedicated hose) for sake of simplicity not shown in the scheme of figure 2, or discharged in the tank designated as element D-1000.

According to an embodiment in the collecting tank a first pump (G-100) for "sewage" is dipped which suctions the mixture to be treated towards the herein described apparatus. According to an embodiment, the pump operation is controlled by a level of max/min and by a liter-counting flowmeter installed at the entrance of apparatus 1. The flowmeter has the purpose both of measuring the flow inletting the apparatus, which can be adjusted by acting on a suitable valve, and of measuring the volume to be treated entering the apparatus 1. Volume which can be set on the control panel: once reached the set volume, the apparatus stops. At this point the washing cycle of each section - if selected - can start autonomously or one has to wait that all sections have completed the working cycle to be ready for the next *batch.* The apparatus can even work continuously.

The waste water to be treated collected in the tank or collection tanks is then subject to the additional steps of the method according to the present invention, preferably by means of an apparatus as herein described.

### Pretreatment step

According to an embodiment the method provides a pretreatment step. The pretreatment step is optional, in particular it could not be performed in case only the waste water collected by the atomizer washing has to be treated. According to this embodiment the waste water to be treated from the collecting tank is then subjected to a pretreatment, in figure 3 the "tanks" for the pretreatment are designated as a whole with the abbreviation F-100. The pretreatment step could provide up to three steps described hereinafter in details: The first step (A) is a sedimentation and a static flotation wherein the liquid is sent to a tank (D-500), in particular a truncated conical tank or a tank with a tilted or concave bottom collected from the tank T-100.

In this tank by gravity the suspended solids (SS) go to the bottom and the oils/hydrocarbons upwards. Preferably one collects at half height to have a clean liquid. According to an alternative option, instead of letting SS to be accumulated in the tank, a cartridge or bag filter (F-500) will be used. The suspended solids kept by the filter F-500 together with those kept by the filter F-501 will be sent to the disposal together with the filters whereas the filtrate will be sent ahead of the apparatus. In order to do this an air (membrane) pump could be used, for example, capable of creating a depression, for example of about 0.2-0.3 bar, so as to allow the filtration which thus takes place under depression. For the bigger systems or other configuration a pump working under pressure could be used.

The second pretreatment step (B) consists in transferring the liquid phase without the suspended solids into a settler with lamellar pack, in particular with truncated conical or concave bottom. The bottom deposit is treated as above, by means of filtration with Filter F-501. The portion that remains in surface is sent to a second lamellar pack.

The third step (C) is a twin unit of the second step (B) which depending upon the type of made connections can act as second settler or floater for the separation of oils. If it acts as floater the surface portion is sent to the oil-collecting tank (T-310) which depending upon the law about waste disposal could be, or could not be, in common with the collecting tank of the nanofiltration (NF) concentrate; and the liquid collected onto the bottom without oils is sent to the ultrafiltration (UF) section. If this tank acts as settler (II stage), the portion collected in surface is sent to the UF and the portion remaining on the bottom to the F-501.

According to an aspect ahead of the first stage of the lamellar pack a portion of the ultrafiltration (UF) concentrate can be made to recirculate for an additional separation of the suspended solids (SS). The liquid so treated by gravity flows into the recirculation tank D-1000 of UF section. The capacity of each pretreatment tank could be for example 200-400 litres, preferably about 300 litres. According to an aspect the lamellar packs used in the pretreatment step are made of thermoformed PVC with profile height ranging from 12 to 19 millimetres with crossed channels.

### Ultrafiltration step

The UF ultrafiltration or microfiltration section could be constituted by polymeric, ceramic, metallic tubular ultrafiltration membranes; polymeric or ceramic flat membranes, polymeric and ceramic capillary membranes membrane, polymeric wound-spiral membranes. In the present description under ultrafiltration membranes also membranes with a 0.05-micron porosity are meant, in the state of art sometimes the membranes with porosity of this type are not designated as ultrafiltration, but as microfiltration membranes.

According to a preferred embodiment it is constituted by ceramic membranes with channels ranging from 2.0 mm to 16 mm, the porosity will be preferably 1kD to 1.4 micron, whereas the length could be comprised from 20 to 150 cm, preferably for smaller apparatuses from 50 to 110 cm.

The support material preferably will be made of Al₂O₃ or TiO₂ or SiC, whereas the filtering layer of ZrO₂ and/or Al₂O₃ and/or TiO₂ and/or SiC.

The UF passage will start once reached a certain volume in the supply tank designated in figure as D-1000, which could be for example of about 30 litres. The level is measured by the flowmeter placed in the input section, in the smaller apparatuses a level *switch* could be used. The ultrafiltration will start by actuating the pump, designated in figure as element G-101. The permeate flow could be adjusted by a flowmeter acting on an *inverter.*

According to an aspect the ultrafiltration is provided with a *back-pulse* system and a system for fluxing with clean water -permeate of the (first) second nanofiltration or mains stage (option which can be selected by the operator), the waste water could be even heated.

UF continues to operate until in section: A) the volume set for the subject *batch* has entered or B) the set production time has elapsed. In order to avoid that the tank (D-1000) of UF is emptied or overflows the one (T-200) of NF section downwards suitable level switches will be provided which make the permeate valve to be closed.

Once ended the batch, the residual concentrate is sent to the supply pit of the system (T-100) by means of the recirculation pump G101 before pretreatment (automatic depletion cycle). The UF concentrate can be sent both ahead of the pretreatment section or to the collecting tank of the pesticide products (NF first stage concentrate).

The UF section at this point can be stopped, alternatively either rinsed with water or with suitable detergents.

By way of example by supplying the apparatus with 500 litres the concentrate at the end of production will be equal to 25 litres (VCR=20). The permeate volume is equal to 475 litres. The permeate flow for example will be set between 40 and 50 l/h, preferably 47 l/h.

### Nanofiltration step

In the nanofiltration (NF) step preferably polymeric nanofiltration membranes will be used, for example made of polymeric material such as PA, PS, PES. Such membranes could be both like wound spiral and tubular and flat. According to a preferred option those of NF270 type of DOW Chemicals will be used.

Based upon the system sizes the module sizes or the membrane configuration could be changed.

Not according to the present invention, instead of nanofiltration the reverse osmosis could be used. However, tests performed by the inventors have highlighted lower effectiveness of this solution.

Based upon the concentration and the type of pesticide products even more than one nanofiltration or reverse osmosis step could be provided.

According to an embodiment there is a first nanofiltration step wherein a collection and recirculation from the tank T-200 is performed by sending the permeate to a tank for collecting the permeate to use it for washing (tank D100), after having filled-up the tank D-4000 it will be possible to select or not the tank (accumulation tank of washing water, fluxing).

In a second nanofiltration step the permeate of the first step is sent to the tank D-3000, from here once finished a half-batch (that is emptied of tank T-200), it is collected still with pump G.102, and treated again with NF membrane, by sending the permeate to D-4000. Once filled up D-4000 to the tank D-100. Even in this second step in case a step with active carbon filters will be provided, preferably the active carbon filter will be a FCA-400 cartridge.

According to an aspect the concentrate of the first nanofiltration step (included in T-200) is sent either directly to a collection tank (T-310) for the subsequent disposal or to a concentration system, such as for example an evaporator which uses the solar light and the panels to produce heat. In case of mixtures of crop protection products which do not include herbicides and/or hormonal compounds, the NF concentrate could be used for preparing the mixture for the subsequent treatments. Whereas the concentrate of the second NF step (included in tank D-300) will be sent with the pump G-102 to the tank T-100 or T-200 or as above illustrated reused for preparing other mixtures.

In the first and second NF step the same pump and the same membrane could be used, but a different tank for supplying and accumulating the permeate will be used.

If the water used for NF is not compatible with the polymeric membranes (for example high SDI) the method will provide to send the water to be treated ahead of the UF section in order to remove the colloids and the microbial charge.

By way of example it is noted that the NF step could start for example when the UF section has produced at least 30 litres of permeate.

By way of example the concentration factor (VCR) reached with NF is comprised between 7-15 for the first step, whereas for the second between 10-20.

The apparatus, not forming part of the current invention is also described herein.

According to an aspect represented in figure 3 the apparatus comprises a pretreatment unit to perform the pretreatment step as described above in details. Such pretreatment unit, designated as a whole as F-100, provides a first pretreatment tank D-500 for static sedimentation and flotation, in particular with truncated conical shape or with tilted or concave bottom. The first pretreatment tank D-500 will be connected so that the waste water is collected from the tank T-100 and poured inside thereof and the liquid free of the suspended solids is transferred to a second pretreatment tank D-510 for sedimentation in lamellar pack, with truncated conical or concave bottom. The second pretreatment tank D-510 in turn will be connected to a third pretreatment tank D-520 identical to the second one and connected to the supply tank of the ultrafiltration D-1000.

According to an aspect the apparatus will be configured so as to make a portion of the ultrafiltration (UF) or microfiltration (MF) concentrate to recirculate in the upper portion of the tank with lamellar pack, so as to obtain an additional separation of the suspended solids (SS). The so treated liquid by gravity flows into the recirculation tank D-1000 of the UF section. The capacity of each pretreatment tank could be for example di 200-400 litres, preferably about 300 litres.

The apparatus will further include a first filtration unit c provided with a ultrafiltration or microfiltration membrane D-101 and a pump G-101 connected to the tank F-100 so that when the apparatus is in use the waste water collected in the tank D-1000 is ultrafiltrated and the permeate of the ultrafiltration is accumulated in a second tank T-200 in turn connected to a second filtration unit comprising a nanofiltration membrane D-102 and a second pump G-102. The nanofiltration unit is connected to the tank T-200 so that when the apparatus is in use the content of the tank T-200 is nanofiltered and the nanofiltration permeate is transferred to the collecting tank D-100, whereas the nanofiltration concentrate is sent to the tank T-310 or reused to create the subsequent mixtures.

According to an aspect the ultrafiltration membrane D-101 of the apparatus is a ceramic membrane by ultrafiltration or microfiltration with channels ranging from 2.0 mm to 8.0 mm, a porosity comprised between 1kD and 1.4 micron and a length comprised between 20 and 150 cm, wherein the support material of said membrane by ultrafiltration is made of Al₂O₃ or TiO2 or SiC and the filtering layer is made of ZrO₂ and/or Al₂O₃ and/or TiO₂ and/or SiC.

According to an aspect the nanofiltration membrane D-102 of the apparatus is a polymeric spiral-like or tubular membrane by nanofiltration. In the nanofiltration (NF) step preferably polymeric nanofiltration membranes will be used, for example made of polymeric material such as PA, PS, PES. Such membranes could be both like a wound spiral and tubular and flat. According to a preferred embodiment, membranes of the NF270 type of the DOW Chemicals will be used.

According to an aspect the apparatus could further include one or more active carbon filters (FCA-400) connected so as to further depurate the nanofiltration permeate.

According to a schematized drawing in figure 4 the apparatus includes a pretreatment unit comprising a first series of tanks designated as a whole with F-100 which will be filled-up with the waste water collected in the collecting tank T-100 by means of the pump designated in figure as G-100 - pretreatment section. The apparatus will further include a first filtration unit comprising an accumulation tank D-1000, a ultrafiltration or microfiltration membrane D-101 and a pump G-101 connected to the tank D-1000 so that when the apparatus is in use the waste water collected in the tank - D1000 is ultrafiltered or microfiltered and the ultrafiltration permeate is sent directly to a second filtration unit comprising a nanofiltration membrane D-102 and a second pump G-102. The nanofiltration unit is connected directly to the ultrafiltration or microfiltration permeate tube so that when the apparatus is in use the UF (or microfiltration (MF)) permeate is nanofiltered and the nanofiltration permeate is transferred to the collecting tank D-100, whereas the nanofiltration concentration is sent to the tank of the apparatus T-310 or reused to create the subsequent mixtures. The apparatus could include one or more active carbon filters designated with FCA-400 in figures which will be connected in the apparatus so that the permeate is further depurated by means of the active carbons before being collected in D-100. If the apparatus as above is used, the method preferably will provide even one or more of the following steps:
- dosing in the tank D-1000 of the chemical products necessary to the system operation, that is the products which help in avoiding that the membranes get dirty or decrease their performances, for example but not limited to, antiscalants, acids, bases, not oxidizing biocids, preferably the dosing will be performed with a pneumatic system with exact minimum dosing;
- once the tank D-1000 is filled up, activation of the pumps G-101 and G102;
- direct supply of the nanofiltration unit by means of the ultrafiltration permeate tube, thus exerting a counterpressure on the ultrafiltration permeate, by avoiding the intermediate tank;
- pressurizing with air or gas the container D-1000 and adjusting the pressure in the container D-1000 depending upon the flow which is measured outletting the nanofiltration, when NF flow is low the pressure in the D-1000 will be increased, when the flow is high it will be reduced;
- emptying the system with compressed air.

The apparatus then could further include means for dosing chemical substances, means for pressurizing with air or gas the container D-1000 and adjusting the pressure thereof and/or means for emptying the system with compressed air.

According to figure 5 the apparatus comprises a second nanofiltration unit or filtration unit by reverse osmosis. Said second unit will be configured so that the nanofiltration permeate of the first stage is sent directly by suction to the pump G-103 of the second nanofiltration or reverse osmosis stage, whereas the NF concentrate of the second stage is sent or sucked to the pump G -102 or to the tank D-1000 or discharged both to be reused or to go back to T-100. As described above, it will be provided to pressurize with air or gas the container D-1000 and to adjust the pressure in the container D-1000 depending upon the flow which is measured outletting the nanofiltration, when the NF flow is low the pressure in D-1000 will be increased, when the flow is high it will be decreased. The apparatus could then include means for controlling the flows, in particular means for pressurizing the tank D-1000 with air or other gas.

According to the aspect represented schematically in figures 7-9 the pretreatment unit is constituted by tanks made of CLS and an automatic system for washing the tractors. In these figures an apparatus having larger sizes suitable to the washing of a high number of tractors per day (even higher than 100) is shown. In this case the whole apparatus is laid underground and positioned under the yard provided for washing the agricultural vehicles and water collection. In particular, on the left bottom the portion related to the pretreatment can be seen, constituted by a stilling basin for the first separation of the rough material - which by precipitating is collected in the first left sector, followed by a section wherein a separator in lamellar pack is installed suitably for an additional separation of the suspended solids and the fats and oils. The latter are collected in a suitable conduit - represented on top in the tank. The so-pretreated waste water, after intermediate storage is sent to the membrane section - represented in the right portion of the figure - for concentration and purification. The permeate is used for washing the medium. The concentrates are sent to the disposal or reused as previously described for the other embodiments. The washing of the medium can take place by means of cleaning machines manoeuvred by an operator or by means of an automatized washing system with water jets at a medium and/or high pressure. On the top right the control panel of the whole apparatus is shown.

### Examples

Hereinafter some measurements are shown obtained in the field with the method according to the embodiments of figures 2 and 3, wherein in the first filtration unit a ultrafiltration membrane was used, whereas in the second filtration unit a nanofiltration membrane was used.

Table 1 summarizes some of the values of some chemical compounds measured inletting and outletting the apparatus.

**Table 1**

| **Compound** | **Unit** | **Apparatus inletting waste water** | **Apparatus outletting pemeate** |
|---|---|---|---|
| Total surfactants | mg/l | >20 | <2 |
| TOC | mg/l | >500 | <40 |
| Oils, Fats and Hydrocarbons | mg/l | >400 | <1 |
| Copper | mg/l | >20 | <0.01 |
| Sulphur | mg/l | >250 | <0.01 |
| Suspended solids | % | >3 | 0 |
| Total active principles | mg/l | >12 | <0.05 |

The output values reflect the current limits of the Italian law (DL 152/06) for the discharge in surface water. Under the term "total active principles" the sum of all active principles is meant, measured with the multi-residual method UNI EN 15662:2009,

Table 2 shows the average reduction effectiveness values of the apparatus for some compounds detected during an operating period of the apparatus equal to two months. As % of decrease the rejection of the whole apparatus, and not of each single section, was considered.

**Table 2**

| **Component** | **% Reduction** | **Component** | **% Reduction** |
|---|---|---|---|
| Total surfactants | 99.58% | Tetraconazole | 95.24% |
| TOC | 92.11% | Ametoctradin | 91.67% |
| Copper | 99.73% | Clorantranilipole | 99.06% |
| Sulphur | 99.98% | Spiroxamine | 94.69% |
| Aluminium | 99.86% | Cyazofamide | 97.00% |
| Suspended solids | 100.00% | Spinosad | 96.55% |
| Difenoconazol | 96.97% | Tetraconazole 2 | 97.62% |
| Dimetomorf | 94.74% | Metalaxyl | 95.00% |
| Myclobutanil | 98.79% | Glyphosate | 99.86% |
| Pendimethalin | 97.60% | - | - |

These data were obtained by making the system to operate in the following daily treated volumes comprised between 400 and 600 litres.

In particular for a batch of 500 litres per day at the end of the day the ultrafiltration concentrate was sent to the collecting tank of waste water.

The nanofiltration concentrate after the first step on the average was equal to 48 litres (volume to be disposed of), whereas the concentrate of the second step of NF on the average was equal to - 30 litres. The permeate to be used as washing water on the average was equal to 400 litres.

The process yield calculated as the ratio between the produced permeate and the treated volume can be established to be equal to 80%. Depending upon and based upon the composition of the treated mixture, yields comprised between 70% and 95% have been found.

During the tests an antiscalant agent and an acid to reduce the pH and a not oxidizing biocid were dosed - the dosages were made - automatically after selection of the dosing receipts.

The present invention has been sofar described with reference to some preferred embodiments. It is to be meant that other embodiments belonging to the same inventive core may exist, as defined by the protective scope of the herebelow reported claims.

## Claims

1. A method for the treatment and reuse of waste water of washing of agricultural vehicles comprising the following steps:
i) collecting the waste water originated from washing of agricultural vehicles in one or more tanks or collection tanks (T-100, D-100);
ii) ultra-filtering or micro-filtering the washing water collected in step i);
iii) subjecting the permeate obtained from ultrafiltration or microfiltration to one or more steps of nanofiltration;
iv) reusing the permeate obtained from the nanofiltration step for washing the agricultural vehicles and/or for preparing mixtures of pesticides.

2. The method according to claim 1 comprising a further step of pretreatment of said waste water prior to step ii) of ultrafiltration or microfiltration comprising the following steps:
a) static sedimentation and flotation of said waste water in a first tank (D-500);
b) sedimentation of the liquid phase devoid of suspended solids obtained from step a) in a first tank with lamellar pack (D-510)
c) sedimentation or flotation of the liquid phase obtained from step b) in a second tank (D-520) with lamellar pack.

3. The method according to claim 1 or 2 wherein said ultrafiltration or microfiltration is performed by using a tubular or flat membrane, of polymeric or ceramic or metallic type, preferably wherein said ultrafiltration is performed by using a ceramic ultrafiltration membrane with channels from 2.0 mm to 16.0 mm, a porosity comprised between 1kD and 1.4 micron and a length comprised between 20 to 150 cm.

4. The method according to anyone of the preceding claims, wherein the support material of said membrane for ultrafiltration or microfiltration is made of Al₂O₃ and/or TiO₂ and/or SiC and the filtering layer is made of ZrO₂ and/or Al₂O₃ and/or TiO₂ and/or SiC.

5. The method according to anyone of the preceding claims, wherein said nanofiltration is performed by using a polymeric spiral-like wound or tubular membrane for nanofiltration.

6. The method according to anyone of the preceding claims, comprising a further step wherein the permeate obtained from the nanofiltration step is filtered through an activated carbon filter.

7. The method according to anyone of the preceding claims, comprising two steps of nanofiltration on the same or additional membrane, wherein the concentrate obtained from the first and/or second nanofiltration is transferred into one of the collecting tanks (T-310, T-100, T-200) for disposal or to a concentration system, in particular an evaporator charged by solar light.

8. The method according to anyone of the preceding claims, wherein the concentrate obtained from the ultrafiltration or microfiltration step is transferred into one of the collecting tanks (T-100) and/or subjected to the pretreatment step as defined in claim 2 and/or the concentrate of nanofiltration is reused to dissolve more active principles, in particular if they use no herbicides or other compounds not compatible or in a concentration such as to be harmful to the plants.

## Patentansprüche

1. Ein Verfahren zur Behandlung und Wiederverwendung von beim Waschen von landwirtschaftlichen Fahrzeugen anfallendem Abwasser, umfassend die folgenden Schritte:
i) Sammeln des Abwassers, das beim Waschen von landwirtschaftlichen Fahrzeugen anfällt, in einem oder mehreren Behältern oder Sammelbehältern (T-100, D-100);
ii) Ultrafiltrieren oder Mikrofiltrieren des im Schritt i) gesammelten Waschwassers;
iii) Unterziehen des bei der Ultrafiltrierung oder der Mikrofiltrierung erhaltenen Permeats einem oder mehreren Schritten der Nanofiltration;
iv) Wiederverwenden des bei dem im Nanofiltrationsschritt erhaltenen Permeats zum Waschen von landwirtschaftlichen Fahrzeugen und/oder zum Zubereiten von Pestizid-Mischungen.

2. Das Verfahren gemäß Anspruch 1, umfassend einen weiteren Schritt der Vorbehandlung des besagten Abwassers vor dem Schritt ii) der Ultrafiltrierung oder Mikrofiltrierung, umfassend die folgenden Schritte:
a) statische Sedimentation und Flotation des besagten Abwassers in einem ersten Behälter (D-500);
b) Sedimentation der flüssigen, von Schwebstoffen freien Phase, die im Schritt a) erhalten wurde, in einem ersten Behälter mit lamellarer Packung (D-510);
c) Sedimentation oder Flotation der flüssigen Phase, die im Schritt b) erhalten wurde, in einem zweiten Behälter (D-520) mit lamellarer Packung.

3. Das Verfahren gemäß Anspruch 1 oder 2, wobei die besagte Ultrafiltration oder Mikrofiltration unter Verwendung einer röhrenförmigen oder flachen Membran ausgeführt wird, die polymerer, keramischer oder metallischer Bauart ist, vorzugsweise wobei die besagte Ultrafiltration unter Verwendung einer keramischen Ultrafiltrationsmembran mit Kanälen von 2,0 mm bis 16,0 mm, einer Porosität zwischen 1 kD und 1,4 Mikrometer und einer Länge zwischen 20 und 150 cm ausgeführt wird.

4. Das Verfahren gemäß einem der vorhergehenden Ansprüche, wobei das Stützmaterial der besagten Membran für die Ultrafiltration oder Mikrofiltration aus Al₂O₃ und/oder TiO₂ und/oder SiC, und die Filterschicht aus ZrO₂ und/oder Al₂O₃ und/oder TiO₂ und/oder SiC besteht.

5. Das Verfahren gemäß einem der vorhergehenden Ansprüche, wobei die besagte Nanofiltration unter Verwendung einer polymeren, spiralförmig gewickelten oder röhrenförmigen Nanofiltrationsmembran ausgeführt wird.

6. Das Verfahren gemäß einem der vorhergehenden Ansprüche, umfassend einen weiteren Schritt, wobei das bei dem Nanofiltrationsschritt erhaltene Permeat durch einen Aktivkohlefilter filtriert wird.

7. Das Verfahren gemäß einem der vorhergehenden Ansprüche, umfassend zwei Schritte der Nanofiltration mit der gleichen oder einer zusätzlichen Membran, wobei das bei der ersten und/oder zweiten Nanofiltration erhaltene Konzentrat in einen der Sammelbehälter (T-310, T-100, T-200) zur Entsorgung weitergeleitet wird, oder zu einer Konzentrierungsanlage, insbesondere zu einem Verdampfer, der von Sonnenlicht aufgeladen wird.

8. Das Verfahren gemäß einem der vorhergehenden Ansprüche, wobei das bei dem Ultrafiltrations- oder Mikrofiltrationsschritt erhaltene Konzentrat in einen der Sammelbehälter (T-100) weitergeleitet und/oder dem Vorbehandlungsschritt gemäß Anspruch 2 unterzogen wird, und/oder wobei das Konzentrat von der Nanofiltration wiederverwendet wird, um mehr Wirkstoffe zu lösen, insbesondere wenn sie keine Herbizide oder andere Komponenten verwenden, die nicht kompatibel sind oder in einer Konzentration vorliegen, die schädlich für die Pflanzen ist.

## Revendications

1. Procédé pour le traitement et la réutilisation d'eaux usées de lavage de véhicules agricoles, comprenant les étapes suivantes :
i) collecte des eaux usées provenant du lavage de véhicules agricoles dans un ou plusieurs réservoirs ou réservoirs de collecte (T-100, D-100) ;
ii) ultrafiltration ou microfiltration des eaux de lavage collectées dans l'étape i) ;
iii) soumission du perméat obtenu à partir de l'ultrafiltration ou de la microfiltration à une ou plusieurs étapes de nanofiltration ;
iv) réutilisation du perméat obtenu à partir de l'étape de nanofiltration pour le lavage des véhicules agricoles et/ou pour la préparation de mélanges de pesticides.

2. Procédé selon la revendication 1, comprenant une étape supplémentaire de prétraitement desdites eaux usées avant l'étape ii) d'ultrafiltration ou de microfiltration, comprenant les étapes suivantes :
a) sédimentation statique et flottation desdites eaux usées dans un premier réservoir (D-500) ;
b) sédimentation de la phase liquide dépourvue de solides en suspension obtenue à partir de l'étape a) dans un premier réservoir avec un pack lamellaire (D-510) ;
c) sédimentation ou flottation de la phase liquide obtenue à partir de l'étape b) dans un deuxième réservoir (D-520) avec un pack lamellaire.

3. Procédé selon la revendication 1 ou 2, dans lequel ladite ultrafiltration ou microfiltration est effectuée par utilisation d'une membrane plate ou tubulaire, de type polymère ou céramique ou métallique, de préférence dans lequel ladite ultrafiltration est effectuée par utilisation d'une membrane d'ultrafiltration céramique avec des canaux de 2,0 mm à 16,0 mm, une porosité comprise entre 1 kD et 1,4 micromètres et une longueur comprise entre 20 et 150 cm.

4. Procédé selon l'une quelconque des revendications précédentes, dans lequel le matériau de support de ladite membrane pour l'ultrafiltration ou la microfiltration est fait d'Al₂O₃ et/ou TiO₂ et/ou SiC et la couche filtrante est faite de ZrO₂ et/ou Al₂O₃ et/ou TiO₂ et/ou SiC.

5. Procédé selon l'une quelconque des revendications précédentes, dans lequel ladite nanofiltration est effectuée par utilisation d'une membrane polymère de nanofiltration tubulaire ou enroulée analogue à une spirale.

6. Procédé selon l'une quelconque des revendications précédentes, comprenant une étape supplémentaire dans laquelle le perméat obtenu à partir de l'étape de nanofiltration est filtrée à travers un filtre au charbon activé.

7. Procédé selon l'une quelconque des revendications précédentes, comprenant deux étapes de nanofiltration sur une membrane identique ou additionnelle, dans lequel le concentré obtenu à partir des première et/ou deuxième nanofiltrations est transféré dans l'un des réservoirs de collecte (T-310, T-100, T-200) pour être jeté ou pour aller dans un système de concentration, en particulier un évaporateur alimenté par la lumière solaire.

8. Procédé selon l'une quelconque des revendications précédentes, dans lequel le concentré obtenu à partir de l'étape d'ultrafiltration ou de microfiltration est transféré dans l'un des réservoirs de collecte (T-100) et/ou soumis à l'étape de prétraitement telle que définie dans la revendication 2 et/ou le concentré de la nanofiltration est réutilisé pour dissoudre davantage de principes actifs, en particulier s'ils n'utilisent pas d'herbicides ou d'autres composés incompatibles ou à une concentration telle qu'ils soient dangereux pour les plantes.
